# EUROPÄISCHE PATENTSCHRIFT

(11) **EP 1 770 010 B1**
(45) Veröffentlichungstag und Bekanntmachung des Hinweises auf die Patenterteilung: **02.06.2010**
(21) Anmeldenummer: 06020424.5
(22) Anmeldetag: 28.09.2006
(51) Int. Cl.: B64C 13/04, G05G 9/047

(54) **Steuervorrichtung mit einem Steuerknüppel für ein Luftfahrzeug**
Control device with a joystick for an aircraft
Dispositif de commande avec un levier de commande pour un aéronef

(30) Priorität: 30.09.2005 DE 202005015434 U
(43) Veröffentlichungstag der Anmeldung: 04.04.2007
(73) Patentinhaber: Liebherr-Aerospace Lindenberg GmbH, 88161 Lindenberg/Allgäu (DE)
(72) Erfinder: Decker, Walter Ernst, 91575 Windsbach (DE)
(74) Vertreter: Thoma, Michael

(56) Entgegenhaltungen:
- EP-A- 1 450 231
- US-A1- 2001 002 127

## Beschreibung

Die vorliegende Erfindung betrifft eine Steuervorrichtung für ein Luftfahrzeug, mit einem mehrachsig kippbaren Steuerknüppel zur Betätigung zumindest zweier Steuersignalgeber zur Nick- und Rollsteuerung des Luftfahrzeugs, wobei die Steuersignalgeber zwei Steuerwellen zugeordnet sind, die mit dem Steuerknüppel über ein kardanartiges Gelenk mit zwei zueinander quer ausgerichteten Schwenkachsen verbunden sind, über das eine Nickbewegung des Steuerknüppels in eine Drehung der einen Steuerwelle und eine Rollbewegung des Steuerknüppels in eine Drehung der anderen Steuerwelle umsetzbar ist.

Steuerknüppel von Flugzeugen sind üblicherweise zweiachsig kippbar, nämlich einerseits um eine Querachse nach vorne und hinten und andererseits um eine Längsachse nach rechts und links. Durch die entsprechenden Kippbewegungen werden Steuerwellen betätigt, deren Drehung von Signalgebern erfasst und in Steuerbewegungen des Flugzeugs, insbesondere zur Nick- und Rollsteuerung, umgesetzt werden. Hierzu ist es beispielsweise aus der DE 38 25 809 bekannt, den Steuerknüppel mittels eines Kardangelenks zu lagern, an dem die beiden Steuerwellen angelenkt sind. Die zweiachsige Bewegbarkeit des Steuerknüppels bringt es bei dieser vorbekannten Lösung mit sich, dass eine der beiden Steuerwellen nicht ortsfest gelagert werden kann, da sie Schwenkbewegungen der anderen Steuerwelle mitmachen muss. Dementsprechend sind die mit dieser mitbewegbaren Steuerwelle gekoppelten Steuerungskomponenten, wie Signalgeber, Dämpfer und Rückstellfedern und dergleichen, ebenfalls beweglich, so dass ihre Montage und die Kabelführung entsprechend ausgebildet sein muss, um die Bewegungen zuzulassen. Das Problem verschärft sich dabei mit zunehmender Komplexität der Steuerungsvorrichtung. Sogenannte aktive Steuerknüppelsteuerungen von Flugzeugen umfassen eine elektrische Simulation des Steuerungsgefühls, wie es bei mechanisch gekoppelten Steuerknüppeln gegeben ist. Hierzu sind Stellmotoren mit den Steuerwellen verbunden, um am Steuerknüppel Gegendruck, Stellbewegungen oder Beschleunigungen zu simulieren, wie dies beispielsweise in der DE 694 16 969 T2 beschrieben ist. Überdies werden bei Flugzeugen mit zwei Steuerknüppeln für Pilot und Copilot die Steuerbewegungen an dem einen Steuerknüppel an dem anderen Steuerknüppel simuliert bzw. letzterem nachgeführt, vgl. EP 0 844 171 B1 oder EP 0 383 663 B1. Auch für solche gekoppelten Steuersysteme werden Stellmotoren und diverse weitere Komponenten, wie Sensoren, Potentiometer, etc., an die Steuerwellen angebaut. Aus der EP 14 50 231 A2 ist eine Steuervorrichtung mit einem mehrachsig kippbaren Steuerknüppel bekannt, der zwei sich senkrecht schneidende Steuerwellen betätigt, wobei der Steuerknüppel an der einen Steuerwelle drehbar gelagert ist und an der anderen Welle, die spangenförmig um die genannte eine Welle herum läuft, in einer schlitzförmigen Nut geführt ist. Weiterhin beschreibt die US 2001/0002127 A1 eine Steuervorrichtung mit einem mehrachsig verkippbaren Steuerknüppel, der an seinem dem Griffbereich abgewandten Ende einen Schalter niederdrückt, wenn er in der unausgelenkten Stellung ist, und diesen Schalter freigibt, wenn er seitlich verkippt ist.

Hiervon ausgehend liegt der vorliegenden Erfindung die Aufgabe zugrunde, eine verbesserte Steuervorrichtung der vorgenannten Art zu schaffen, die Nachteile des Standes der Technik vermeidet und letzteren in vorteilhafter Weise weiterbildet. Vorzugsweise soll eine einfache Steuervorrichtung mit wenigen Bauteilen geschaffen werden, die den Anbau der Sensorik und Aktorik erleichtert und ein einfaches Umrüsten der Sensorik- und Aktorikkomponenten für verschiedene Steuerungsausführungen erlaubt.

Erfindungsgemäß wird diese Aufgabe durch eine Steuervorrichtung nach Anspruch 1 gelöst. Bevorzugte Ausgestaltungen der Erfindung sind Gegenstand der abhängigen Ansprüche.

Es wird hierzu vorgeschlagen, der kardangelenkartigen Verbindung des Steuerknüppels mit den beiden Steuerwellen im Vergleich zu einem klassischen Kardangelenk einen zusätzlichen Freiheitsgrad zu geben, der den Steuerknüppel hinsichtlich Nickbewegungen von der Steuerwelle für Rollbewegungen und hinsichtlich Rollbewegungen von der Steuerwelle für Nickbewegungen abkoppelt. Erfindungsgemäß sind die beiden Steuerwellen ortsfest in einem gemeinsamen Gehäuse drehbar gelagert. Das Gelenk besitzt gegenüber den Steuerwellen jeweils einen Freilauf für Kippbewegungen des Steuerknüppels in einer Ebene parallel zu der jeweiligen Steuerwelle. Ein Schwenken des Steuerknüppels um seine Nickachse nach vorne und hinten bewirkt also ausschließlich ein Verdrehen der Nicksteuerwelle, während ein Kippen des Steuerknüppels nach rechts und links um seine Rollachse lediglich eine Drehbewegung der Rollsteuerwelle bewirkt. Die jeweils andere Steuerwelle erfährt keine Drehung bzw. keine Verschwenkung. Dabei sind die Steuerwellen mit Stellmotoren verbunden, die in dem Gehäuse aufgenommen und an den Gehäusewandungen befestigt sind, so dass die Steuerwellen, die von Motorwellen der Stellmotoren gebildet sind, von den Stellmotoren drehbar gelagert sind.

Vorteilhafterweise besitzen die beiden Steuerwellen ortsfeste Ausgänge, so dass sich die Montage von den jeweiligen Steuerwellen zugeordneten Steuerungsmodulen beträchtlich vereinfacht. Es müssen keine bewegten Anschlussleitungen vorgesehen werden, da die Sensorik und Aktorik ortsfest am Gehäuse montiert sein kann. Zudem können geringe bewegte Massen erreicht werden, da angebaute Sensorik- oder Aktorikkomponenten nicht mitbewegt werden. Zudem kann eine hohe Zuverlässigkeit und ein einfacher innerer Aufbau der Steuervorrichtung durch eine geringe Anzahl an Komponenten erreicht werden. Vor allen Dingen jedoch ist eine modulare Nutzung der Steuervorrichtung als aktiver oder passiver Steuerknüppel möglich, da die für die verschiedenen Ausführungsformen der Steuerung jeweils notwendigen Komponenten modular angebaut bzw. ausgetauscht werden können.

Der zusätzliche Freiheitsgrad der kardangelenkartigen Verbindung zwischen Steuerknüppel und Steuerwellen kann in Weiterbildung der Erfindung insbesondere durch eine Schiebeführung an dem Gelenk erreicht werden, die sich in einer Ebene parallel zu einer der beiden Steuerwellen erstreckt. Nach einer vorteilhaften Ausführung der Erfindung kann ein erster Gelenkteil starr mit dem Steuerknüppel verbunden und an einer der Steuerwellen um eine dazu querverlaufende Schwenkachse kippbar angelenkt sein, während ein zweiter Gelenkteil drehfest, insbesondere starr mit der anderen Steuerwelle verbunden ist und eine Schlitzführung aufweist, in der das erste Gelenkteil bzw. der damit starr verbundene Steuerknüppel geführt ist. Bewegungen des Steuerknüppels in Längsrichtung der Schlitzführung werden nicht auf das zweite Gelenkteil und damit die damit verbundene Steuerwelle übertragen, während Steuerknüppelbewegungen senkrecht zur Längsachse der Schlitzführung sehr wohl auf den zweiten Gelenkteil und die daran befestigte Steuerwelle übertragen werden.

Die Schlitzführung muss dabei nicht zwangsweise zwischen dem Steuerknüppel und dem genannten zweiten Gelenkteil vorgesehen sein. Alternativ kann die Schlitzführung auch zwischen dem zweiten Gelenkteil und der zweiten Steuerwelle vorgesehen sein, so dass das zweite Gelenkteil zwar drehfest mit der zweiten Steuerwelle verbunden ist, jedoch um eine dazu senkrechte Achse verschwenken kann. Das genannte zweite Gelenkteil ist in diesem Fall mit dem ersten Gelenkteil und/oder dem Steuerknüppel verbunden.

In Weiterbildung der Erfindung erstrecken sich die beiden Steuerwellen zueinander senkrecht, wobei das Gelenk derart ausgebildet ist, dass die beiden Schwenkachsen des Gelenks jeweils senkrecht auf einer der beiden Steuerwellen stehen.

Das zweite Gelenkteil kann grundsätzlich verschieden ausgebildet sein. Eine vorteilhafte Ausführung der Erfindung kann darin bestehen, dass der zweite Gelenkteil einen zumindest halbschalenförmigen Bügel bildet, der die erste Steuerwelle umgreift und einen Längsschlitz aufweist, durch den hindurch sich der Steuerknüppel bzw. das damit starr verbundene andere Gelenkteil erstreckt.

Vorzugsweise ist der Bügel zweischalig ausgebildet, um einen doppelten Lastpfad zu erreichen und damit die Sicherheit zu erhöhen.

Der geschlitzte Bügel kann doppelt gelagert sein. Vorzugsweise ist er auf gegenüberliegenden Seiten drehbar gelagert bzw. mit der zugehörigen zweiten Steuerwelle verbunden. Die doppelte Lagerung des Bügels erlaubt es, dessen Bewegungen doppelt abzugreifen bzw. verschiedene Sensorik- und/oder Aktorikkomponenten anzubauen. Neben einer leichten redundanten Ausführung kann hierdurch auch eine leichte Umbaubarkeit erreicht werden.

Vorzugsweise besitzt auch die andere Steuerwelle zwei abgreifbare Ausgänge, um entsprechende Komponenten anbauen zu können.

Das Gestell kann grundsätzlich verschieden ausgebildet sein. Beispielsweise kann ein entsprechend geformter Träger ausreichend sein, mit dem die Steuervorrichtung an ein Steuerpaneel oder dergleichen montiert werden kann. Nach einer vorteilhaften Ausführung der Erfindung kann das Gestell ein Gehäuse bilden, in dem zumindest das Gelenk aufgenommen ist. In Weiterbildung der Erfindung können in dem Gehäuse auch noch Stellmotoren untergebracht und an den Gehäusewandungen befestigt sein, deren Motorwellen die Steuerwellen bilden können. Zusätzliche Sensorik- oder Aktorikkomponenten können an der Außenseite des Gehäuses montiert werden, wobei die Steuerwellen durch entsprechende Ausnehmungen im Gehäuse von außen zugänglich sind. Das Gehäuse bildet sozusagen eine Basisbox, an die zusätzliche Steuerungskomponenten modular angebaut werden können.

Auf Zentrierfedern und/oder Dämpfungselemente in dem Gehäuse kann in Weiterbildung der Erfindung verzichtet werden. Alle Sensoren und die Elektromotoren sowie Dämpfer und Zentrierfedern können extern und ortsfest an die Steuerwellen angeflanscht werden.

Die Erfindung wird nachfolgend anhand eines bevorzugten Ausführungsbeispiels und einer zugehörigen Zeichnung näher erläutert. In der einzigen Zeichnung zeigt:

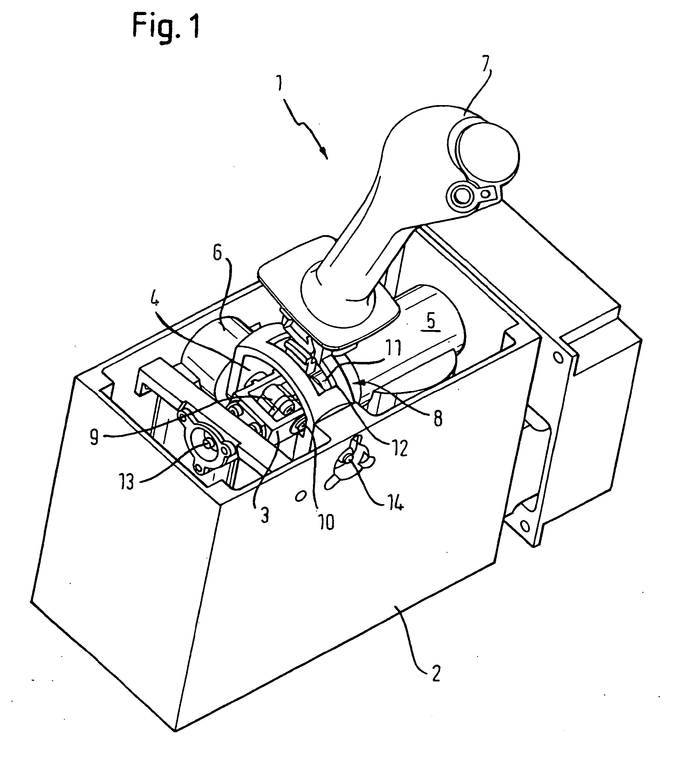

- Fig. 1:: eine perspektivische Ansicht der Steuervorrichtung mit einem Steuerknüppel und dessen gelenkartige Verbindung zu zwei Steuerwellen.

Die in der Figur gezeichnete Steuervorrichtung 1 umfasst ein kastenförmiges Gehäuse 2, in dem zwei Steuerwellen 3 und 4 ortsfest gelagert sind, wobei die Steuerwellen 3 und 4 jedoch natürlich drehbar gelagert sind, so dass sie um ihre Längsachsen gedreht werden können. In der gezeichneten Ausführung sind an die beiden Steuerwellen 3 und 4 Stellmotoren 5 und 6 angeflanscht, die ebenfalls im Inneren des Gehäuses 2 aufgenommen sind und an diesem starr montiert sind.

An den beiden Steuerwellen 3 und 4 ist ein Steuerknüppel 7 über ein kardanartiges Gelenk 8 mit zwei zueinander quer verlaufenden Schwenkachsen angelenkt. Das Gelenk 8 ist dabei derart ausgebildet, dass die beiden Schwenkachsen aufeinander senkrecht stehen und mit den beiden fest montierten Steuerwellen 3 und 4 zusammenfallen.

Konkret umfasst das Gelenk 8 in der gezeichneten Ausführung ein erstes Gelenkteil 9, das an der ersten Steuerwelle 3 angelenkt ist, und zwar um eine zu der genannten ersten Steuerwelle 3 senkrecht verlaufenden Querachse 10, so dass der Steuerknüppel in einer die erste Steuerwelle 3 enthaltenden Ebene nach vorne und nach hinten gekippt werden kann.

Ein zweites Gelenkteil 11 ist in der gezeichneten Ausführung als ein im wesentlichen U-förmiger bzw. halbschalenförmiger Bügel ausgebildet, der drehfest mit der zweiten Steuerwelle 4 verbunden ist. Wie die Figur zeigt, umgreift der bügelförmige zweite Gelenkteil 11 die erste Steuerwelle 3 und ist an seinen gegenüberliegenden Schenkeln drehbar gelagert, und zwar um die von der zweiten Steuerwelle 4 definierte Drehachse.

Die beiden Gelenkteile 9 und 11 sind durch eine Schiebeführung 12 miteinander gekoppelt, die sich in einer die zweite Steuerwelle 4 enthaltenden Ebene erstreckt. Konkret umfasst in der gezeichneten Ausführung die Schiebeführung 12 einen Längsschlitz in dem Verbindungsschenkel des bügelförmigen zweiten Gelenkteils 11, durch den hindurch sich der Steuerknüppel 7 bzw. das damit starr verbundene erste Gelenkteil 9 erstreckt. Durch die Schiebeführung 12 erhält das erste Gelenkteil 9 gegenüber dem zweiten Gelenkteil 11 einen Freilauf in einer die zweite Steuerwelle 4 enthaltenden Ebene. In einer dazu senkrechten Ebene enthaltend die erste Steuerwelle 3 sind die beiden Gelenkteile 9 und 11 durch die Schiebeführung 12 hingegen gekoppelt, d.h. das erste Gelenkteil 9 bzw. der Steuerknüppel 7 nimmt den zweiten Gelenkteil 11 bei Bewegungen nach vorne und hinten in der die erste Steuerwelle 3 enthaltenden Ebene mit.

Wie die Figur zeigt, sind die beiden Steuerwellen 3 und 4 faktisch auf beiden Seiten des Gelenks 8 jeweils drehbar gelagert. Einerseits sind Drehlager 13 und 14 vorgesehen. Andererseits sind die Steuerwellen 3 und 4 durch die Stellmotoren 5 und 6 drehbar gelagert.

Die beschriebene Anordnung bietet vielfältige Vorteile. Zunächst ist anzuführen, dass die Sensorik bzw. Aktorik ortsfest am Gehäuse montiert ist, so dass keine bewegten Anschlussleitungen, Schleifkontakte oder dergleichen benötigt werden. Es wird eine hohe Sicherheit durch doppelte Lastpfade und eine geringe Klemmwahrscheinlichkeit erreicht. Zudem sind die bewegten Massen durch die ortsfest angeordneten Steuerwellen 3 und 4 gering. Neben einer hohen Zuverlässigkeit wird ein einfacher innerer Aufbau durch eine geringe Anzahl von Komponenten erzielt. Insbesondere ist eine modulare Nutzung der Steuervorrichtung 1 sowohl als aktiver als auch als passiver Steuerknüppel möglich, indem jeweils die passenden Sensorik- und Aktorikkomponenten angebaut werden. Weiterhin ist eine beliebig redundante Nutzung durch die Möglichkeit eröffnet, an beiden Seiten der Gelenklagerung weitere Elemente, wie z. B. Sensoren, Motoren, Schalter usw., vorzusehen.

## Patentansprüche

1. Steuervorrichtung für ein Luftfahrzeug, mit einem mehrachsig kippbaren Steuerknüppel (7) zur Betätigung zumindest zweier Steuersignalgeber zur Nick- und Rollsteuerung des Luftfahrzeugs, wobei die Steuersignalgeber zwei Steuerwellen (3, 4) zugeordnet sind, die mit dem Steuerknüppel (7) über ein kardanartiges Gelenk (8) mit zwei zueinander quer ausgerichteten Schwenkachsen verbunden sind, über das eine Nickbewegung des Steuerknüppels (7) in eine Drehung der einen Steuerwelle (3) und eine Rollbewegung des Steuerknüppels (7) in eine Drehung der anderen Steuerwelle (4) umgesetzt wird, wobei die beiden Steuerwellen (3, 4) ortsfest in einem gemeinsamen Gehäuse (2) drehbar gelagert sind und das Gelenk (8) gegenüber den Steuerwellen (3, 4) jeweils einen Freilauf für Kippbewegungen des Steuerknüppels (7) in einer Ebene parallel zu der jeweiligen Steuerwelle (3, 4) besitzt, wobei mit den Steuerwellen (3, 4) Stellmotoren verbunden sind, wobei die Stellmotoren (5, 6) an den Gehäusewandungen befestigt sind, so dass die Steuerwellen (3, 4), die von den Motorwellen der Stellmotoren (5, 6) gebildet sind, durch die genannten Stellmotoren (5 und 6) drehbar gelagert sind, **dadurch gekennzeichnet, dass** die Stellmotoren (5,6) in dem Gehäuse (2) aufgenommen sind.

2. Steuervorrichtung nach dem vorhergehenden Anspruch, wobei das Gelenk (8) eine Schiebeführung (12) in einer Ebene parallel zu einer der Steuerwellen (4) aufweist.

3. Steuervorrichtung nach einem der vorhergehenden Ansprüche, wobei die beiden Steuerwellen (3, 4) zueinander senkrecht angeordnet sind und die beiden Schwenkachsen des Gelenks (8) jeweils senkrecht auf einer der beiden Steuerwellen (3, 4) stehen.

4. Steuervorrichtung nach einem der vorhergehenden Ansprüche, wobei ein erster Gelenkteil (9) starr mit dem Steuerknüppel (7) verbunden und an einer ersten der beiden Steuerwellen (3) um eine dazu quer verlaufende Schwenkachse (10) kippbar angelenkt ist und ein zweiter Gelenkteil (11) drehfest, insbesondere starr mit der zweiten der beiden Steuerwellen (4) verbunden ist und eine Schlitzführung aufweist, in der das erste Gelenkteil (9) und/oder der Steuerknüppel (7) parallel zu der zweiten Steuerwelle (4) verschieblich geführt ist.

5. Steuervorrichtung nach dem vorhergehenden Anspruch, wobei der zweite Gelenkteil (11) einen zumindest halbschalenförmigen Bügel aufweist, der die erste Steuerwelle (3) umgreift und einen Längsschlitz (12) aufweist, durch den hindurch sich der Steuerknüppel (7) erstreckt.

6. Steuervorrichtung nach dem vorhergehenden Anspruch, wobei der Bügel (11) auf gegenüberliegenden Seiten drehbar gelagert ist und Anschlussstellen für eine Steuerwelle oder daran kuppelbare Sensorik- und/oder Aktorikkomponenten aufweist.

7. Steuervorrichtung nach einem der vorhergehenden Ansprüche, wobei die beiden Steuerwellen (3, 4) beidseitig Anschlussstellen besitzen.

8. Steuervorrichtung nach einem der vorhergehenden Ansprüche, wobei Ausrüstungsbausteine und/oder -gruppen modular mit den Steuerwellen (3, 4) koppelbar und/oder an dem Gehäuse (2) montierbar sind.

9. Steuervorrichtung nach einem der vorhergehenden Ansprüche, wobei Stellmotoren (5, 6) mit den Steuerwellen (3, 4) koppelbar und am Gehäuse (2) montierbar sind.

10. Steuervorrichtung nach einem der vorhergehenden Ansprüche, wobei Dämpfungselemente und/oder Zentrierfedern mit den Steuerwellen (3, 4) koppelbar und an dem Gehäuse (2) montierbar sind.

11. Steuervorrichtung nach einem der vorhergehenden Ansprüche, wobei das Innere des Gehäuses (2) frei von Dämpferelementen und/oder Zentrierfedern ausgebildet ist und/oder das Gehäuse (2) auf seiner Außenseite Anschlusspunkte für die Montage von Sensorelementen, Dämpfungselementen, Rückstellfederelementen und/oder anderen Sensorik- und/oder Aktorikkomponenten aufweist.

12. Steuervorrichtung nach einem der beiden vorhergehenden Ansprüche, wobei die beiden Gelenkteile (9, 11) des Gelenks (8) jeweils als doppelter Lastpfad ausgebildet sind.

## Claims

1. A control apparatus for an aircraft comprising a multiaxially tiltable joystick (7) for the actuation of at least two control transducers for the pitch and roll control of the aircraft, wherein the control transducers are associated with two control shafts (3, 4) which are connected to the joystick (7) via a Cardan-like joint (8) with two pivot axes aligned transversely to one another, with a pitch movement of the joystick (7) being be converted via said joint into a rotation of the one control shaft (3) and a roll movement of the joystick (7) being converted into a rotation of the other control shaft (4), wherein the two control shafts (3, 4) are rotatably journalled in a fixed manner at a common housing (2) and the joint (8) in each case has a freewheel with respect to the control shafts (3, 4) for tilt movements of the joystick (7) in a plane parallel to the respective control shaft (3, 4), wherein actuator motors are connected to the control shafts (3, 4), wherein the actuator motors (5, 6) are fastened to the housing walls so that the control shafts (3, 4) which are formed by the motor shafts of the actuator motors (5, 6) are rotatably journalled by the named actuator motors (5 and 6), **characterised in that** the actuator motors (5, 6) are received in the housing (2).

2. A control apparatus in accordance with claim 1, wherein the joint (8) has a sliding guidance (12) in a plane parallel to one of the control shafts (4).

3. A control apparatus in accordance with one of the preceding claims, wherein the two control shafts (3, 4) are arranged perpendicular to one another and the two pivot axes of the joint (8) each stand perpendicular on one of the two control shafts (3, 4).

4. A control apparatus in accordance with one of the preceding claims, wherein a first joint part (9) is rigidly connected to the joystick (7) and is tiltably connected to a first of the two control shafts (3) about a pivot axis (10) extending transversely thereto and a second joint part (11) is connected in a rotationally fixed manner, in particular rigidly, to the second of the two control shafts (4) and has a slot guidance in which the first joint part (9) and/or the joystick (7) is displaceably guided parallel to the second control shaft (4).

5. A control apparatus in accordance with one of the preceding claims, wherein the second joint part (11) has an at least half-shell shaped hoop which engages around the first control shaft (3) and has a longitudinal slot (12) through which the joystick (7) extends.

6. A control apparatus in accordance with one of the preceding claims, wherein the hoop (11) is rotatably journaled on oppositely disposed sides and has connector points for a control shaft or for sensor components and/or actuator components which can be coupled thereto.

7. A control apparatus in accordance with one of the preceding claims, wherein the two control shafts (3, 4) have connector points on both sides.

8. A control apparatus in accordance with one of the preceding claims, wherein equipment modules and/or equipment groups can be coupled to the control shafts (3, 4) and/or can be installed at the housing (2) in a modular manner.

9. A control apparatus in accordance with one of the preceding claims, wherein actuator motors (5, 6) can be coupled to the control shafts (3, 4) and can be installed at the housing (2).

10. A control apparatus in accordance with one of the preceding claims, wherein damping elements and/or centring springs can be coupled to the control shafts (3, 4) and can be installed at the housing (2).

11. A control apparatus in accordance with one of the preceding claims, wherein the interior of the housing (2) is made free of damper elements and/or of centring springs; and/or the housing (2) has connector points at its outer side for the installation of sensor elements, damping elements, restoring spring elements and/or other sensor components and/or actuator components.

12. A control apparatus in accordance with either of the two preceding claims, wherein the two joint parts (9, 11) of the joint (8) are each made as a double load path.

## Revendications

1. Dispositif de commande pour un aéronef, avec un levier de commande (7) multiaxial basculant destiné à l'actionnement d'au moins deux postes transmetteurs de signal de commande pour la commande de roulement et de tangage de l'aéronef, les postes transmetteurs de signal de commande étant affectés à deux arbres de commande (3, 4), qui sont reliés par le levier de commande (7) via une articulation à la Cardan (8) à deux axes de pivotement alignés transversalement l'un par rapport à l'autre, via laquelle un mouvement de tangage du levier de commande (7) est converti en une rotation d'un des arbres de commande (3) et un mouvement de roulement du levier de commande (7) en une rotation de l'autre arbre de commande (4), les deux arbres de commande (3, 4) étant tournants sur paliers de manière stationnaire dans un carter mutuel (2), et l'articulation (8) face aux arbres de commande (3, 4) possédant respectivement une roue libre pour les mouvements de basculement du levier de commande (7) parallèlement sur un plan par rapport à l'arbre de commande (3, 4) respectif, des moteurs de commande étant reliés aux arbres de commande (3, 4), les moteurs de commande (5, 6) étant fixés aux parois du carter de manière à ce que les arbres de commande (3, 4) qui sont établis par les arbres du moteur des moteurs de commande (5, 6) sont tournants sur paliers à travers les moteurs de commande (5 et 6), **caractérisé en ce que** les moteurs de commande (5, 6) sont intégrés dans le carter (2).

2. Dispositif de commande selon la revendication précédente, l'articulation (8) présentant un guidage de glissement (12) parallèlement sur un plan par rapport à l'un des arbres de commande (4).

3. Dispositif de commande selon une quelconque des revendications précédentes, les deux arbres de commande (3, 4) étant disposés perpendiculaires l'un à l'autre et les deux axes de pivotement de l'articulation (8) se trouvant chacun verticalement sur l'un des deux arbres de commande (3, 4).

4. Dispositif de commande selon une quelconque des revendications précédentes, un premier élément d'articulation (9) étant connecté de manière rigide avec le levier de commande (7) et articulé de manière basculante sur un premier des deux arbres de commande (3) autour d'un axe de pivotement (10) s'étendant transversalement par rapport à celui-ci et un deuxième élément d'articulation (11) étant résistant à la torsion, notamment connecté de manière rigide avec le deuxième des deux arbres de commande (4) et présentant un guidage à rainure dans lequel le premier élément d'articulation (9) et/ou le levier de commande (7) est guidé de manière mobile parallèlement au deuxième arbre de commande (4).

5. Dispositif de commande selon la revendication précédente, le deuxième élément d'articulation (11) présentant une chape au moins en forme de demi-cuvette, qui enveloppe le premier arbre de commande (3) et présente une fente oblongue (12), à travers laquelle s'étend le levier de commande (7).

6. Dispositif de commande selon la revendication précédente, la chape (11) étant tournante sur paliers sur des côtés opposés et présentant des points de raccordement pour un arbre de commande ou des composants sensoriels et/ou actoriques couplables à celui-ci.

7. Dispositif de commande selon une quelconque des revendications précédentes, les deux arbres de commande (3, 4) possédant sur les deux côtés des points de raccordement.

8. Dispositif de commande selon une quelconque des revendications précédentes, des modules et/ou groupes d'équipement étant couplables de manière modulaire avec les arbres de commande (3, 4) et/ou montables sur le carter (2).

9. Dispositif de commande selon une quelconque des revendications précédentes, des moteurs de commande (5, 6) étant couplables avec les arbres de commande (3, 4) et montables sur le carter (2).

10. Dispositif de commande selon une quelconque des revendications précédentes, des éléments d'amortissement et/ou ressorts de centrage étant couplables avec les arbres de commande (3, 4) et montables sur le carter (2).

11. Dispositif de commande selon une quelconque des revendications précédentes, l'intérieur du carter (2) étant constitué sans éléments d'amortissement et/ou ressorts de centrage et/ou le carter (2) présentant sur son flanc extérieur des points de raccordement pour le montage d'éléments de capteurs, d'éléments d'amortissement, d'éléments à ressort de rappel et/ou d'autres composants sensoriels et/ou actoriques.

12. Dispositif de commande selon une quelconque des deux revendications précédentes, les deux éléments d'articulation (9, 11) de l'articulation (8) étant constitués chacun comme voie de charge double.
